# EUROPEAN PATENT APPLICATION

(11) **EP 3 527 695 A1**
(43) Date of publication of application: **21.08.2019**
(21) Application number: 18156793.4
(22) Date of filing: 14.02.2018
(51) Int. Cl.: C25B 1/00, C25B 3/04, C25B 15/08, B01D 53/14

(54) **INTEGRATED ELECTROCHEMICAL CAPTURE AND CONVERSION OF CARBON DIOXIDE**

(71) Applicant: Nederlandse Organisatie voor toegepast- natuurwetenschappelijk onderzoek TNO, 2595 DA 's-Gravenhage (NL)
(72) Inventor: Goetheer, Earl Lawrence Vincent, 2595 DA's-Gravenhage (NL); Latsuzbaia Roman, 2595 DA's-Gravenhage (NL); Anastasopol, Anca, 2595 DA's-Gravenhage (NL)
(74) Representative: V.O.

(57) **Abstract**

The invention is directed to a method for electrochemically reducing carbon dioxide, and an apparatus for performing the method.

The method of the invention comprises
a) contacting a carbon dioxide-containing gas stream with a capture solvent, thereby absorbing carbon dioxide from the carbon dioxide-containing gas stream to form a carbon dioxide-rich capture solvent;
b) introducing at least part of the carbon dioxide-rich capture solvent into a cathode compartment of an electrochemical cell;
c) applying an electrical potential between an anode and a cathode in the electrochemical cell sufficient for the cathode to reduce carbon dioxide into a reduced carbon dioxide product or product mixture in the carbon dioxide-rich capture solvent, thereby providing a carbon dioxide-poor capture solvent;
d) collecting the reduced carbon dioxide product or product mixture, and
e) optionally recirculating at least part of the carbon dioxide-poor capture solvent to an absorber unit,
wherein the anode is separated from the cathode by a semi-permeable separator, and wherein the absolute pressure in the electrochemical cell is preferably 20 bar or more and 138 bar or less and the temperature in the electrochemical cell is preferably 0 °C or more.

## Description

The invention is directed to a method for electrochemically reducing carbon dioxide, and an apparatus for performing the method.

The use of fossil fuels in activities such as electricity and heat production, agriculture and forestry, manufacturing, and transportation has made fossil fuel the primary source of carbon dioxide.

Boden et al. (Global, Regional, and National Fossil-Fuel CO2 Emissions; Carbon Dioxide Information Analysis Center, Oak Ridge National Laboratory, U.S. Department of Energy, Oak Ridge, Tennessee, USA, 2017) claim global carbon emissions from fossil fuels have significantly increased since 1900. The above-mentioned activities have contributed to approximately 90 percent carbon dioxide emission increase since the 1970s.

In recent decades effort is put into innovative technologies to circumvent recognised environmental effects caused by significant amounts of carbon dioxide being emitted in the atmosphere. Exemplary technologies encompass converting carbon dioxide to economically valuable chemical compounds, such as carbon monoxide, alcohols (*e.g.* methanol and ethanol) and carboxylic acids (*e.g.* formic acid, oxalic acid and acetic acid, or their salts). One such promising carbon dioxide conversion technique is direct heterogeneous electrochemical reduction (or electroreduction).

Electrochemical production has the economical potential to recycle carbon dioxide as an energy carrier, thereby reducing its accumulation in the atmosphere, and storing energy in high value and high energy density (chemical) form.

Industries face several further obstacles when converting carbon dioxide. One of which is poor selectivity, the low product selectivity is the result of inappropriate adsorption energies of carbon dioxide reduction intermediates on a catalyst surface. Secondly, poor current (or Faradaic) efficiencies are encountered, because of competitive hydrogen evolution reaction (HER), which takes place in the same range of the potentials as the reduction of carbon dioxide. Most catalysts reported so far in literature exhibit a high overpotential for the reduction reaction, which significantly reduces energy efficiency of the process (Kortlever et al., J. Phys. Chem. Lett. 2015, 6(20), 4073-4082).

Besides further developing catalysts, another way to improve the conversion process of carbon dioxide is to increase its concentration in the electrolyte. In other words, an economically feasible electrochemical conversion of carbon dioxide can be accomplished by utilising high concentration carbon dioxide sources.

The majority of electroreduction processes of carbon dioxide is performed under aqueous conditions containing various salts to improve the electrical conductivity, and to increase the carbon dioxide content. However, water solubility of carbon dioxide is relatively low.

Current electroreduction technologies embody elaborate processes, consisting of multiple sequential steps. These steps concern carbon dioxide capture, carbon dioxide release followed by purification, and recovery of the carbon capture solvent, solubilising carbon dioxide in aqueous, organic or inorganic electrolyte, and electrochemically converting the solubilised carbon dioxide to high value-added chemicals. This process can be made more efficient by omitting the carbon dioxide release and purification steps, and using an electrolyser to directly react solubilised carbon dioxide from the capture solvent.

Methods for capturing carbon dioxide may include the use of chemical or physical solvents, or hybrids thereof. Common encountered chemical solvent systems are aqueous and comprise ethanolamines (*e.g.* monoethanolamie, *N*-methyldiethanolamine and diglycolamine). These species chemically react with carbon dioxide to form carbamates. An example of direct electrochemical reduction of CO₂ from monoethanolamine, by reducing formed carbamates reported by Chen et al. (ChemSusChem 2017, 10(20), 4109-4118).

Additionally, common encountered chemical solvent systems also include aqueous solution of 2-amino-2-methyl-1-propanol (AMP), tertiary amine methyldiethanolamine (MDEA), and ammonia (NH₃), which form bicarbonates upon loading with CO₂.

ethanolamines (e.g. monoethanolamie, *N*-methyldiethanolamine and diglycolamine). These species chemically react with carbon dioxide to form carbamates. An example of direct electrochemical reduction of CO₂ from monoethanolamine, by reducing formed carbamates reported by Chen et al. (ChemSusChem 2017, 10(20), 4109-4118).

Heat is applied to regenerate chemical solvents. A further disadvantage of using chemical solvents is their corrosiveness. While chemical solvents appear to be favoured with low partial pressure of carbon dioxide, physical solvents become more practical and economically desirable at elevated partial pressures.

The absorption limit plays an important role, and is dependent on the vapour-liquid equilibrium of the mixture, which is governed by the pressure and temperature. At high carbon dioxide partial pressure, the carbon dioxide loading capacity of the solvent is higher for physical solvents than for chemical solvents. A further advantage of using physical solvents is that they can be stripped of absorbed substances by simply reducing the pressure. Some examples that use physical solvents in electroreducing carbon dioxide include the following.

For example, Tory et al. (ChemElectroChem 2015, 2(2), 213-217) report the electrochemical reduction of carbon dioxide by using the scrubbing solvent used in the Purisol™ process (*N*-methyl-2-pyrrolidone). No suggestions are made as to whether the electroreduction of carbon dioxide can be performed at high pressure, nor do Tory *et al.* connect an electrochemical cell to an absorber unit.

Shi et al. (Electrochimica Acta 2017, 240, 114-121) report the conversion of carbon dioxide into carbon monoxide by means of electroreduction. Herewith, Shi *et al.* use the solvent of the Fluor™ process (propylene carbonate), in combination with tetrabutylammonium perchlorate. In addition hereto, water is desirable as its presence is considered advantageous to conductivity and the solubility of carbon dioxide. No suggestions are made as to whether the electroreduction of carbon dioxide can be performed at high pressure, nor do Shi *et al.* connect an electrochemical cell to an absorber unit.

Saeki et al. (J. Phys. Chem. 1995, 99(20), 8440-8446) report the electrochemical reduction of carbon dioxide with high current density (rate of reduction) in an aqueous methanol system. According to Saeki *et al*., operating pressures above 20 bar do not significantly contribute to the reduction rate of carbon dioxide.

Kaneco et al. (Fuel Chemistry Division Preprints 2002, 47(1), 71-72) report the electrochemical reduction of carbon dioxide to methane under aqueous conditions, and combining it with the technology of the Rectisol™ process. Herewith, methanol is used as the capture solvent, and the operating temperature is near 0°C, because of beneficial behaviour of the capture solvent. However, the low operating temperature impedes the electrochemical reduction of carbon dioxide. Therefore, the process requires additional temperature steps and process units to obtain methane. In addition, Kaneco *et al.* do not report pressure as a process parameter, nor are other physical solvents suggested.

Another physical solvent one may encounter in capturing carbon dioxide from gas streams is the one used in the Selexol™ process. This process deploys a mixture of dimethyl ethers of polyethylene glycols (DPEG). The Selexol™, Coastal AGR® or Genosorb® solvents are known for their property to reach significant levels of carbon dioxide loading at elevated partial pressures.

Besides chemical solvents and physical solvents, one may encounter hybrid systems comprising a combination of chemical and physical solvents. Suitable examples are Sulfinol® and Amisol®. However, electrochemical reduction processes of carbon dioxide do not appear to be known with such hybrid systems.

There is a need to develop an economically viable process and method for reducing carbon dioxide emissions, and converting the captured carbon dioxide into useful chemical compounds. Herewith, it is desirable to find other processes, or alter and intensify current processes, that are less expensive and more (energy) efficient, require less operational units, i.e. no carbon dioxide release and purification step of the carbon dioxide-containing gas stream, preferably use only one carbon capture solvent functioning both as a capture solvent and as an electrolyte, and tolerate high (partial) pressure. In addition, it is desirable to perform the carbon dioxide capture process and electrochemical reduction of carbon dioxide at similar pressure and temperature conditions.

An objective of the invention is to overcome one or more of the disadvantages faced in the prior art.

A further objective of the invention is to provide an energy and resource efficient method for electrochemically reducing carbon dioxide from carbon dioxide-containing gas streams.

Yet a further objective of the invention is to provide a cost efficient method for capturing and electrochemically reducing carbon dioxide by process intensification, wherewith capital investments are reduced without sacrificing production rates.

Yet a further objective of the invention is to provide a method for capturing carbon dioxide with a capture solvent wherein the carbon dioxide is directly electrochemically reduced in the sense that it is physically dissolved so that it can react directly, resulting in significantly reduced process time and process costs.

Yet a further objective of the invention is to provide a method for electrochemically reducing carbon dioxide from carbon dioxide-containing gas streams, wherewith the carbon dioxide is absorbed to a physical solvent and/or a chemical solvent.

Yet a further objective of the invention is to provide a method for capturing and electrochemically reducing carbon dioxide under elevated absolute pressure (above 20 bar) and temperature (above 0 °C).

Yet a further objective of the invention is to provide an apparatus, wherewith a cost and energy efficient method for capturing carbon dioxide from carbon dioxide-containing gas streams and electrochemically reducing the captured carbon dioxide from a carbon dioxide-rich capture solvent at elevated absolute pressure and temperatures above 0 °C, can be performed.

The inventors found that one or more of these objectives can, at least in part, be met by situating an electrochemical cell after an absorber unit.

Accordingly, in a first aspect the invention provides a method for electrochemically reducing carbon dioxide comprising the following steps:
a) contacting a carbon dioxide-containing gas stream with a capture solvent, thereby absorbing carbon dioxide from the carbon dioxide-containing gas stream to form a carbon dioxide-rich capture solvent;
b) introducing at least part of the carbon dioxide-rich capture solvent into a cathode compartment of an electrochemical cell;
c) applying an electrical potential between an anode and a cathode in the electrochemical cell sufficient for the cathode to reduce carbon dioxide into a reduced carbon dioxide product or product mixture in the carbon dioxide-rich capture solvent, thereby providing a carbon dioxide-poor capture solvent;
d) collecting the reduced carbon dioxide product or product mixture, and
e) optionally recirculating at least part of the carbon dioxide-poor capture solvent to an absorber unit,
wherein the anode is separated from the cathode by a semi-permeable separator, and wherein the absolute pressure in the electrochemical cell is preferably 20 bar or more and 138 bar or less and the temperature in the electrochemical cell is preferably 0 °C or more.

In a second aspect the invention provides an apparatus, preferably for performing the method according to the invention, comprising an absorber unit, and an electrochemical cell connected to the absorber unit, where the electrochemical cell is operative to reduce carbon dioxide from the capture solvent, wherein the absolute pressure within the absorber unit, and electrochemical cell is 1 bar or more and 200 bar or less, and preferably 20 bar or more and 138 bar or less, and wherein the electrochemical cell comprises at least two compartments separated by a semi-permeable separator.

In accordance with the invention, carbon dioxide is captured by a capture solvent and electrochemically reduced from a carbon dioxide-rich capture solvent without having to lower the operating absolute pressure.

The capture and electrochemical reduction of carbon dioxide may be performed with the same fluid medium.

Carbon dioxide may be electrochemically converted to valuable chemical compounds.

Separation and collection of the valuable chemical compounds according to the invention is more easily achieved than from water.

The capture and reduction of carbon dioxide according to the invention requires fewer operational units, wherewith lower capital investment is required.

The carbon dioxide-containing gas stream does not need to be purified.

Carbon dioxide capture and reduction at elevated absolute pressures allow for high current density, which results in lower capital investments required.

The capture of carbon dioxide by a capture solvent and electrochemical reduction of the absorbed carbon dioxide advantageously results in a cost, energy, and resource efficient process.

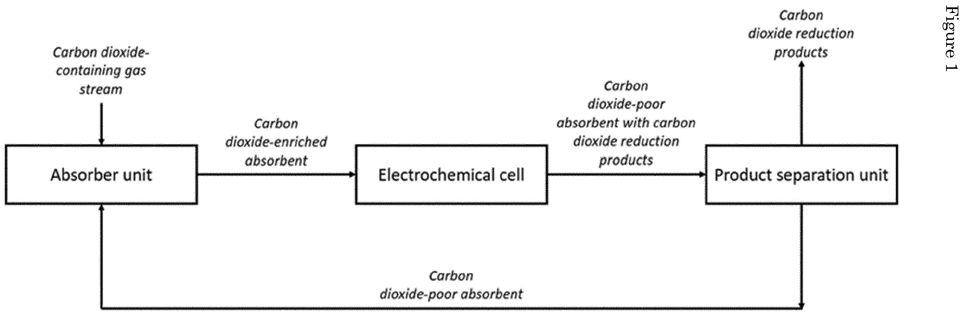

Steps a)-e) are schematically illustrated in detail in the flowchart of figure 1.

A carbon dioxide-containing gas stream is brought in contact with a capture solvent, thereby absorbing carbon dioxide from the carbon dioxide-containing gas stream to form a carbon dioxide-rich capture solvent. The expression "contact" as used herein is meant to include causing the carbon dioxide-containing gas stream to physically and/or chemically connect with the capture solvent. In an embodiment, contact between the carbon dioxide-containing gas stream and the capture solvent can be achieved by imposing a flow or feed of the carbon dioxide-containing gas stream through a connector, such as piping, to a unit, such as an absorber unit, which may comprise the capture solvent.

The expression "capture solvent" as used herein is meant to include a solvent, solvent mixture, absorbent, absorbent mixture, absorbent solvent, and/or absorbing solvent capable of absorbing, capturing, adhering, uptaking and/or including carbon dioxide. The expression also covers reactive processes, wherewith the capture solvent physically absorbs and/or chemically reacts, forming chemical bonds.

A carbon dioxide-containing gas stream may be obtained from any suitable source, such as from a pre-combustion process, a combustion exhaust gas or flue gas of a combustion process, from a natural gas stream including associated gas, from a biogas stream, from synthesis gas, and/or from a carbon dioxide exhaust of for example a fermentative ethanol production plant. Suitable examples of combustion processes include steam methane reforming (SMR), blast furnaces, and air-fired or oxygen-enhanced fossil fuel combustion processes such as power plants, diesel engines, natural gas engines including combined heat and power plants (CHP), waste incineration plants. Additionally industrial waste gasses from cement factories containing high amounts of carbon dioxide can be used.

The carbon dioxide-containing gas stream may comprise between approximately 3 volume percent and approximately 90 volume percent carbon dioxide. Preferably the carbon dioxide-containing gas stream comprises between approximately 8 volume percent and approximately 85 volume percent. Other components that may be contained within the carbon dioxide-containing gas stream include, for example, other combustion by-products, such as water, methane, nitrogen, oxygen, argon, carbon monoxide, sulphur oxides, hydrogen sulphide, and/or nitrogen oxides.

The carbon dioxide-containing gas stream may be treated to remove contaminants or impurities that would negatively affect the invention. Furthermore, moisture or water may be present in the carbon dioxide-containing gas stream. The presence of moisture or water may contribute positively to electrical conductivity.

Depending upon the source of the carbon dioxide-containing gas stream, it may require compression, for example by means of one or more compressors, to an absolute pressure from approximately 1 bar to approximately 200 bar. The carbon dioxide-containing gas stream may be fed into a unit under pressure. Preferably, the absolute pressure of the carbon dioxide-containing gas stream is 20 bar or more, 30 bar or more, 40 bar or more, 50 bar or more, 60 bar or more, 70 bar or more, 80 bar or more, 90 bar or more, 100 bar or more, 110 bar or more, 120 bar or more, 130 bar or more, 140 bar or more, 150 bar or more, 160 bar or more, 170 bar or more, 180 bar or more, 190 bar or more, or 200 bar or more. An absolute pressure below 20 bar may result in a too low carbon dioxide concentration, wherewith the process efficiency may be adversely affected. At absolute pressures of 60 bar or more carbon dioxide may be liquid at room temperature. Liquid carbon dioxide may not adversely affect the absorption of carbon dioxide. Carbon dioxide at absolute pressures above 70 bar and temperatures above 30 °C may result in its supercritical state. Absolute pressures above 200 bar may require the process parts to be further fortified in order to handle such pressures. More preferably, the absolute pressure of the carbon dioxide-containing gas stream is 20 bar or more and 180 bar or less, even more preferably 20 bar or more and 150 bar or less, and most preferably 20 bar or more and 140 bar or less. In particular, the initial absolute pressure of the carbon dioxide-containing gas stream is maintained throughout the absorption process and electrochemical reduction process. As a possible result, no (additional) pressure swing adsorption units are required. According to the ideal gas law, elevated temperatures require the pressure to be elevated as well.

The temperature in the electrochemical cell during the method of the invention is preferably 0 °C or more. A temperature below 0 °C may adversely affect the conversion of carbon dioxide to a reduced carbon dioxide product or product mixture. In particular, the temperature may be 100 °C or less, 90 °C or less, 80 °C or less, 70 °C or less, 60 °C or less, 50 °C or less, 40 °C or less, 30 °C or less, 20 °C or less, or 10 °C or less. Temperatures of 0-20 °C may adversely affect the absorption process and/or mass transport as the viscosity of capture solvent may increase. When the temperature is more than 70 °C, the partial pressure of carbon dioxide may increase significantly, because of reduced solubility. Herewith, the electrochemical cell may be fortified to cope with elevated pressures. In addition, temperatures of 80-100 °C may adversely affect semi-permeable separator integrity and/or selectivity. Preferably the temperature is 20 °C or more, and 70 °C or less. A temperature of approximately 20 °C or more may not require active cooling of the electrochemical cell nor of the carbon dioxide-rich capture solvent. When the moisture or water content in the capture solvent is low, temperatures of 20 °C and above may result in increased reaction kinetics and mass transport. When water is mixed with the capture solvent to improve electrical conductivity, the optimum temperature may be 60 °C. The optimum temperature may depend on the composition of present catalysts and/or the composition of the capture solvent used. Above the optimum temperature the current efficiency of carbon dioxide reduction may be reduced, while the current efficiency of hydrogen gas production is increased. This may result in a lower overall process efficiency.

The carbon dioxide-containing gas stream is brought in contact with a capture solvent. This process may be performed in a unit, such as an absorber unit. The capture solvent may selectively absorb and/or chemically react with carbon dioxide. Contaminants, impurities and/or components other than carbon dioxide present in the carbon dioxide-containing gas stream may as well be absorbed to and/or reacted with the capture solvent. All components present in the carbon dioxide-containing gas stream, that do not absorb or react to the capture solvent nor occupy void spaces within the unit or pre-unit piping, may be collected and/or vented.

Carbon dioxide from the carbon dioxide-containing gas stream is absorbed by a capture solvent. The carbon dioxide from the carbon dioxide-containing gas stream may chemically react with a capture solvent. The capture solvent may comprise a chemical solvent, a mixture of chemical solvents, a physical solvent, a mixture of physical solvents, or a mixture of chemical and physical solvents (*i.e*. hybrid systems). Preferably, the capture solvent comprises a physical solvent or a mixture thereof selected from the group consisting of (various) dimethyl ethers of polyethylene glycol, *N*-methyl-2-pyrrolidone, methanol, ammonia, and propylene carbonate and/or a hybrid system or a mixture thereof selected from the group consisting of a mixture of diisopropylamine or dimethylethanolamine, water and tetrahydrothiopene or diethylamine, and a mixture of methanol and monoethanolamine, diethanolamine, diisopropylamine or diethylamine. In particular, various dimethyl ethers of polyethylene glycol, methanol, propylene carbonate, or a mixture thereof are preferred, or a mixture of diisopropylamine or dimethylethanolamine, water and tetrahydrothiopene or diethylamine, and a mixture of methanol and monoethanolamine, diethanolamine, diisopropylamine or diethylamine, or a mixture thereof are preferred. More preferred are dimethyl ethers of polyethylene glycol, methanol, propylene carbonate or a mixture thereof, and most preferred are dimethyl ethers of polyethylene glycol.

At least part of the carbon dioxide-rich capture solvent is introduced into the cathode compartment of an electrochemical cell. Preferably, all of the carbon dioxide-rich capture solvent is introduced into the cathode compartment of the electrochemical cell.

The cathode compartment of an electrochemical cell may comprise a cathode material, a catholyte (*i.e*. an electrolyte present in a cathode compartment) and/or a salt.

Within the electrochemical cell the anode and cathode are separated from each other by a semi-permeable separator. In order to improve the mechanical properties of the electrochemical cell, the semi-permeable separator may be mechanically supported. The semi-permeable separator may generally be an ion exchange membrane or a size exclusion membrane. The ion exchange membrane may permit the exchange of ions between the cathode compartment and an anode compartment and/or between one of these compartments with the ion exchange membrane.

The electrochemical cell may be designed as such that the semi-permeable separator is pressed against the cathode and the anode in order to minimise electrical resistance.

The cathode structure may also include two or more different catalyst compositions that are either mixed or located in separate regions of the cathode structure in the cathode compartment. The cathode structure may comprise one or more selected from the group consisting of platinum, palladium, rhodium, osmium, gold, silver, titanium, copper, iridium, ruthenium, lead, nickel, cobalt, zinc, cadmium, tin, iron, gallium, thallium, indium, antimony, and bismuth, oxides and/or alloys thereof, mixed metal oxides, dimensionally stable electrode (DSA®), stainless steel, brass, and carbon-based graphitic electrode. The preferred cathode structure to electrochemically reduce carbon dioxide to carbon monoxide comprises one or more selected from the group consisting of copper, tin, lead, gold, and silver, oxides and/or alloys thereof, and molecular catalysts, such as porphyrins of various metals. The catalyst may be present in the form of nanostructures, such as, nanoparticles and/or nanorods. In addition, the catalyst may be structured as a foam, felt and/or mesh.

In a preferred embodiment, the cathode comprises an electronically conducting metal electrocatalyst. Such an electrocatalyst may be ionic and is suitably capable of providing adsorption sites for carbon dioxide and its reduction intermediates to react and produce carbon dioxide reduction products.

For the electrochemical reduction of carbon dioxide, the cathode may comprise a coating or combination of coatings in a single or plurality of layers on the cathode. When a coating or a combination of coatings is present on the cathode, electrochemical reactions may not be inhibited. In time, when the electrode has lost part of its coating, the electrode may be regenerated with subsequent recoating applications. The coating may comprise one or more species selected from the group consisting of alkali metals, alkaline earth metals, lanthanides, actinides, transition metals, post-transition metals, metalloids, oxides and/or alloys thereof, mixed metal oxides, and ion-conductive polymers. An example of such an ion-conductive polymer is sulfonated tetrafluoroethylene-based fluoropolymer-copolymer. The coating may typically be a very thin layer of several micrometers thick.

Depending on the conductivity of the capture solvent, the electrochemical cell may require additional electricity conducting chemical substance (*i.e*. electrolyte). The electrolyte in the cathode compartment may be different to the electrolyte in the anode compartment. The expression "electrolyte" as used herein is meant to include the capture solvent.

The cathode compartment of the electrochemical cell may comprise a fluid catholyte. In particular, the fluid catholyte is preferably liquid or gaseous, and most preferably the fluid catholyte is liquid. A suitable example of a catholyte may be the capture solvent of steps a)-e). Preferably, the catholyte or catholyte mixture is free of contaminants and other impurities. By introducing at least part of the carbon dioxide-rich capture solvent into the cathode compartment, in the absence of another catholyte in the cathode compartment, the production of undesirable by-products can be circumvented.

Other catholytes may be used as well, though, is not preferred. These may be selected from the group consisting of water, acetone, sulpholane, dimethylsulphoxide, tetrahydrofuran, dimethylformamide, *N*-methyl-2-pyrrolidone, hexamethylphosphoramide, acetonitrile, dichloromethane, propylene carbonate, pyridine, hexafluoro-2-propanol, ionic liquids comprising 1-butyl-3-methylimidazolium and hydrogen sulphate, trifluoroacetate, dihydrogen phosphate, chloride, nitrate, tetrafluoroborate, triflate and/or hexafluorophosphate, or mixtures thereof.

At least one salt in a non-aqueous solution or at least one salt in an aqueous solution may be added to the cathodic compartment to improve electrical conductivity. The salt may be added to the catholyte prior to the carbon dioxide-rich capture solvent entering the electrochemical cell.

It is preferred that if a catholyte other than the capture solvent is selected, the catholyte comprises an acid such as an organic and/or inorganic acid. An inorganic acid may be preferred since, compared to organic acids, inorganic acids may be more inert in the electrochemical (oxidation) reaction in the cathode compartment. The inorganic acid may be selected from the group consisting of hydrochloric acid, carbonic acid, nitric acid, phosphoric acid, sulfuric acid, boric acid, hydrofluoric acid, hydrobromic acid, perchloric acid, hydroiodic acid or a mixture thereof.

The acid may preferably be added in the form of a salt. The salt may be obtained by adding one or more basic compounds to the acid. Suitable examples of basic compounds comprise alkali metal, and carbonate, bicarbonate, hydroxide and/or sulphate. The basic compound may be selected from the group consisting of lithium hydroxide, sodium hydroxide, potassium hydroxide, rubidium hydroxide, caesium hydroxide, magnesium hydroxide, and calcium hydroxide.

When the moisture or water content is low in the cathode compartment and/or in the carbon dioxide-rich capture solvent, one or more salts may be added that are soluble under non-aqueous conditions. Suitable examples of such salts comprise hexafluoroarsenate, perchlorate, tetrafluoroborate, hexafluorophosphate, trifluoromethanesulphonate, *bis*(trifluoromethylsulphonyl)amide, and/or *bis*(trifluoromethylsulphonyl)methide.

The catholyte may be operated during the method of invention at a temperature between -10 and 95 °C. Temperatures of -10 °C and less may limit the use of catholytes because of their freezing points. In particular, the temperature may be 100 °C or less, 95 °C or less, 90 °C or less, 80 °C or less, 70 °C or less, 60 °C or less, 50 °C or less, 40 °C or less, 30 °C or less, 20 °C or less, 10 °C or less, 5 °C or less, or 0 °C or less. The solubility of carbon dioxide tends to increase upon lowering the temperature, resulting in improved carbon dioxide conversion and current efficiencies. A drawback of temperatures below 0 °C is that the operating cost may increase because of elevated electrochemical cell voltages. Temperatures of 70 °C and more may adversely affect the solubility of carbon dioxide and semi-permeable separator integrity and/or selectivity in the electrochemical cell. Preferably the operating temperature of the catholyte is 5 °C or more and 60 °C or less. When the temperature is above 60 °C, the catholyte may require cooling by means of for example an external heat exchanger. By using the heat exchanger, part of the catholyte will be cooled using cooling water, wherewith the temperature of the catholyte can be controlled.

The anode compartment of an electrochemical cell may comprise an anode material, an anolyte (an electrolyte present in an anode compartment) and/or a salt.

The anode structure may also include two or more different catalyst compositions that are either mixed or located in separate regions of the anode structure in the anode compartment. The anode structure and/or catalyst compositions may comprise the material as mentioned above, concerning the cathode material and the catalyst compositions.

The anode compartment of the electrochemical cell may comprise a fluid anolyte. In particular, the fluid anolyte is preferably liquid or gaseous, and most preferably the fluid anolyte is liquid. At least one salt in a non-aqueous solution or at least one salt in an aqueous solution may be added to the anodic compartment to improve electrical conductivity. The anolyte may comprise the one or more mineral acids, one or more basic compounds, one or more resulting salts, and/or one or more salts that are soluble under non-aqueous conditions as mentioned above, concerning the catholyte.

The method of the invention may be operated in batch, semi-continuously, or continuously. Batch processing has a lower risk of failure and is characterised by long reaction times, yet, lower production rates are a result. Continuous processing may be more efficient and lucrative, as products may be obtained in significantly larger amounts and require lower operating costs. It is preferred to perform the method of the invention in a continuous manner.

A sufficient electrical potential between an anode and a cathode in an electrochemical cell is applied for the cathode to reduce carbon dioxide into a reduced carbon dioxide product or product mixture in the carbon dioxide-rich capture solvent, thereby providing a carbon dioxide-poor capture solvent. In particular, the electrical potential may be 0-5 V based on the anode-cathode difference in cell voltage. When the electrical potential is above 5 V, the electrochemical reduction may not be economically viable. The preferred electrical potential is 5 V or less and 0 V or more, 1 V or more, or 3 V or more. The most preferred electrical potential is 0-2 V.

The reduced carbon dioxide product or product mixture may comprise one or more components selected from the group consisting of alkanes, alkenes, carbon monoxide, carboxylic acids or their salts, alcohols, aldehydes, and ketones. More specifically, the reduced carbon dioxide product or product mixture may comprise one or more components selected from the group consisting of carbon monoxide, methane, ethane, ethylene, methanol, formic acid (or an ionic form thereof, such as formate), and acetaldehyde. Preferably, the reduced carbon dioxide product or product mixture comprises one or more selected from the group consisting of carbon monoxide, methanol, formic acid (or an ionic form thereof, such as formate), and acetaldehyde. Most preferred reduced carbon dioxide product is carbon monoxide. By controlling the electrical potential between the anode and the cathode in the electrochemical cell, the desired product or products may be obtained. It is further preferred that the reduced carbon dioxide product or product mixture is gaseous (such as gaseous carbon monoxide, methane or ethylene). This gives the advantage in that separation of the product is easier as compared to the separation of liquid reduction products.

A carbon dioxide-poor capture solvent is provided after the reduction of carbon dioxide from the carbon dioxide-rich capture solvent. The carbon dioxide-poor capture solvent can have a carbon dioxide content of 75 percent or less by total volume of the carbon dioxide-poor capture solvent. A carbon dioxide content of 75 volume percent or more may adversely affect the cost and energy efficiency of the method of the invention. In addition, a carbon dioxide content of 75 volume percent or more may be the result of one or more deficiencies occurring during the process. The preferred carbon dioxide content of the carbon dioxide-poor capture solvent is 60 volume percent or less, 50 volume percent or less, 40 volume percent or less, 30 volume percent or less, 20 volume percent or less, 10 volume percent or less, 8 volume percent or less, 5 volume percent or less, or 2 volume percent or less. When the carbon dioxide volume percentage is 40 volume percent or more the cost and energy efficiency of the method of the invention may be adversely affected. The most preferred carbon dioxide content of the carbon dioxide-poor capture solvent may be 10 volume percent or less.

By analogy, it is preferred that 25 volume percent or more by total volume of the carbon dioxide-rich capture solvent reacts to carbon dioxide reduction products, preferably 40 volume percent or more, such as 50 volume percent or more, 60 volume percent or more, 70 volume percent or more, 80 volume percent or more, 90 volume percent or more, 92 volume percent or more, 95 volume percent or more, or 98 volume percent or more.

Remaining carbon dioxide in the carbon dioxide-poor capture solvent may optionally be recirculated to the absorber unit. Herewith, recirculated carbon dioxide-poor capture solvent may be brought into contact with a carbon dioxide-containing gas stream and carbon dioxide-rich capture solvent. The recirculated carbon dioxide-poor capture solvent may uptake carbon dioxide and become carbon dioxide-rich capture solvent.

The invention further provides an apparatus, preferably for performing the described method provided by the invention, comprising:
- an absorber unit, and
- an electrochemical cell connected to the absorber unit, where the electrochemical cell is operative to reduce carbon dioxide from the capture solvent,
wherein the absolute pressure within the absorber unit, and electrochemical cell is 1 bar or more and 200 bar or less, and preferably 20 bar or more and 138 bar or less, and
wherein the electrochemical cell comprises at least two compartments separated by a semi-permeable separator.

Preferably, the electrochemical cell comprises one or more electrodes that are heated to cause a local release of carbon dioxide at the electrode of the electrochemical cell. In accordance with this preferred embodiment, carbon dioxide release will take place in the electrochemical cell, and as soon as it is released it reacts on the electrode. This allows to obtain a high concentration of gaseous carbon dioxide locally at the electrode.

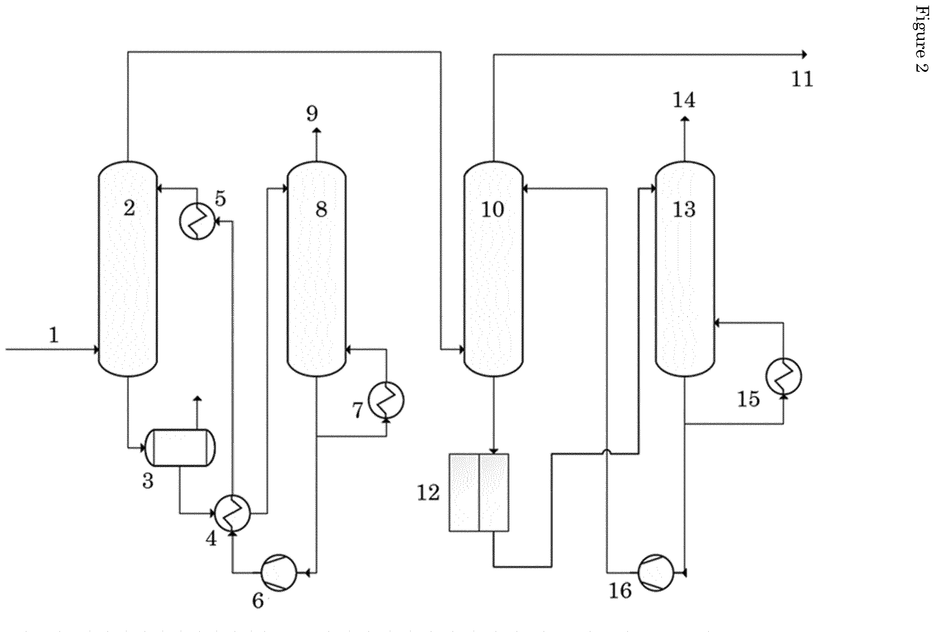

An exemplary embodiment of an apparatus of the invention is illustrated in figure 2. Herein, a gas inlet 1 is able to introduce a gas stream into a hydrogen sulphide absorber 2. The gas stream may be pre-treated by removing solids and undesirable free liquids by means of a filter or a separator located before the gas inlet. The gas stream may also be dehydrated and cooled to an adjustable temperature after the pre-treatment, yet, before the gas inlet. Hydrogen sulphide is absorbed by an absorbent inside the hydrogen sulphide absorber, wherein the gas stream is flowing upward in counter-current with an absorbent, resulting in a hydrogen sulphide-rich absorbent. The hydrogen sulphide-rich absorbent flows to a flash tank 3, where the absolute pressure is adjusted. A rich-lean exchanger unit 4 separates the hydrogen sulphide-rich absorbent from hydrogen sulphide-poor absorbent and absorbent. The hydrogen sulphide-rich absorbent is fed into a hydrogen sulphide generator 8, Herein, the hydrogen sulphide is desorbed from the hydrogen sulphide-rich absorbent by elevating the temperature by means of steam 7, and hydrogen sulphide-rich acid gas is collected 9. Hydrogen sulphide-poor absorbent and absorbent are led back to the rich-lean exchanger unit and hydrogen sulphide absorber by means of a pump 6. A carbon dioxide-containing gas stream, comprising no or little amount of hydrogen sulphide, is led into a carbon dioxide absorber 10 from the hydrogen sulphide absorber. Carbon dioxide is absorbed by an absorbent inside the carbon dioxide absorber, wherein the gas stream is flowing upward in counter-current with an absorbent, resulting in a carbon dioxide-rich absorbent. The resulting gas stream 11, removed of most of the hydrogen sulphide and carbon dioxide, is collected. If the stream contains methane or other commercial gases the collected gas stream may be sent for sales. The carbon dioxide-rich absorbent is led into an electrochemical cell 12, wherein carbon dioxide is electrochemically converted, resulting in a reduced carbon dioxide product or product mixture, and carbon dioxide-poor absorbent. In the embodiment of figure 2, carbon dioxide-poor absorbent and the reduced carbon dioxide product or product mixture are led into a gas stripper unit 13. When the carbon dioxide reduction product are liquid or solid products, a different separation unit can be used. In the gas stripper, the carbon dioxide-poor absorbent is separated from the reduced carbon dioxide product or product mixture. The carbon dioxide-poor absorbent is led back to the carbon dioxide absorber by means of a pump 16. The reduced carbon dioxide product or product mixture is stripped by adjusting the temperature by means of steam 15 and are collected 14.

In operation, the capture solvent absorbs carbon dioxide from the carbon dioxide-containing gas stream in the absorber unit. Carbon dioxide-rich capture solvent is discharged, or introduced, into the electrochemical cell *via* a connection, for reduction of the carbon dioxide.

The electrochemical cell comprises at least two compartments separated by a semi-permeable separator. Reference above-mentioned semi-permeable separator as part of the method provided by the invention. The compartments may comprise a cathode compartment and/or an anode compartment. The semi-permeable separator may also be regarded as a compartment of the electrochemical cell.

Depending upon the source of the carbon dioxide-containing gas stream, it may require compression, for example by means of one or more compressors, to obtain an absolute pressure from approximately 1 bar to approximately 200 bar in the absorber unit and electrochemical cell. The carbon dioxide-containing gas stream may be fed into an absorber unit under pressure. Preferably, the absolute pressure of the carbon dioxide-containing gas stream is 20 bar or more, 30 bar or more, 40 bar or more, 50 bar or more, 60 bar or more, 70 bar or more, 80 bar or more, 90 bar or more, 100 bar or more, 110 bar or more, 120 bar or more, 130 bar or more, 140 bar or more, 150 bar or more, 160 bar or more, 170 bar or more, 180 bar or more, 190 bar or more, or 200 bar or more. An absolute pressure below 20 bar may result in a too low carbon dioxide concentration, wherewith the process efficiency may be adversely affected. Absolute pressures above 200 bar may require apparatus parts belonging to the absorber unit and/or electrochemical cell to be further fortified in order to handle such pressures. More preferably, the absolute pressure of the carbon dioxide-containing gas stream is 20 bar or more and 180 bar or less, even more preferably 20 bar or more and 150 bar or less, and most preferably 20 bar or more and 140 bar or less.

The apparatus may further comprise a stripper unit and/or a separation unit connected to the electrochemical cell. In the stripper unit, the reduced carbon dioxide product or product mixture is collected from the carbon dioxide-poor capture solvent, which is provided by a connection with the electrochemical cell. The carbon dioxide-poor capture solvent may optionally be recirculated to the absorber unit.

The invention has been described by reference to various embodiments, and methods. The skilled person understands that features of various embodiments and methods can be combined with each other.

All references cited herein are hereby completely incorporated by reference to the same extent as if each reference were individually and specifically indicated to be incorporated by reference and were set forth in its entirety herein.

The use of the terms "a" and "an" and "the" and similar referents in the context of describing the invention (especially in the context of the claims) are to be construed to cover both the singular and the plural, unless otherwise indicated herein or clearly contradicted by context. The terms "comprising", "having", "including" and "containing" are to be construed as open-ended terms (i.e., meaning "including, but not limited to") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention. For the purpose of the description and of the appended claims, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

Preferred embodiments of this invention are described herein. Variation of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject-matter recited in the claims appended hereto as permitted by applicable law. Moreover, any combination of the above-described elements in all possible variations thereof is encompassed by the invention unless otherwise indicated herein or otherwise clearly contradicted by context. The claims are to be construed to include alternative embodiments to the extent permitted by the prior art.

For the purpose of clarity and a concise description features are described herein as part of the same or separate embodiments, however, it will be appreciated that the scope of the invention may include embodiments having combinations of all or some of the features described.

## Claims

1. Method for electrochemically reducing carbon dioxide, comprising:
a) contacting a carbon dioxide-containing gas stream with a capture solvent, thereby absorbing carbon dioxide from the carbon dioxide-containing gas stream to form a carbon dioxide-rich capture solvent;
b) introducing at least part of the carbon dioxide-rich capture solvent into a cathode compartment of an electrochemical cell;
c) applying an electrical potential between an anode and a cathode in the electrochemical cell sufficient for the cathode to reduce carbon dioxide into a reduced carbon dioxide product or product mixture in the carbon dioxide-rich capture solvent, thereby providing a carbon dioxide-poor capture solvent;
d) collecting the reduced carbon dioxide product or product mixture, and
e) optionally recirculating at least part of the carbon dioxide-poor capture solvent to an absorber unit,
wherein the anode is separated from the cathode by a semi-permeable separator, and wherein the absolute pressure in the electrochemical cell is preferably 20 bar or more and 138 bar or less and the temperature in the electrochemical cell is preferably 0 °C or more.

2. Method according to claim 1, wherein the carbon dioxide-containing gas stream is introduced in the absorber unit under an absolute pressure of 1 bar or more, and wherein the carbon dioxide is selectively absorbed by the capture solvent.

3. Method according to claim 1 or 2, wherein the capture solvent comprises at least one physical solvent, at least one aqueous physical solvent, at least one chemical solvent, or a mixture of at least one physical solvent and at least one chemical solvent.

4. Method according to claim 3, wherein the physical solvent comprises one or more selected from the group consisting of dimethyl ethers of polyethylene glycol, *N*-methyl-2-pyrrolidone, methanol, ammonia, and propylene carbonate.

5. Method according to claim 3 or 4, wherein the physical solvent is a mixture of various dimethyl ethers of polyethylene glycol.

6. Method according to any one of claims 3-5, wherein the chemical solvent comprises one or more selected from the group consisting of an aqueous solution of 2-amino-2-methyl-1-propanol, tertiary amine methyldiethanolamine, and ammonia.

7. Method according to any one of claims 1-6, wherein the contacting of carbon dioxide-containing gas stream with capture solvent is performed at a temperature of 0 °C or higher.

8. Method according to any one of claims 1-7, wherein each of steps a)-d) of claim 1 is performed at an absolute pressure of 1 bar or more and 200 bar or less, and preferably 20 bar or more and 138 bar or less.

9. Method according to any one of claims 1-8, wherein the reduced carbon dioxide product or product mixture comprises one or more selected from the group consisting of carbon monoxide, alkanes, alkenes, alcohols, carboxylic acids and salts thereof (such as formates, oxalates, and acetates), aldehydes, and ketones.

10. Method according to any one of claims 1-9, wherein the electrochemical cell comprises a cathodic compartment and an anodic compartment.

11. Method according to any one of claims 1-10, wherein at least one salt in a non-aqueous solution or at least one salt in an aqueous solution is added to the cathodic compartment and/or anodic compartment to improve electrical conductivity.

12. Method according to any one of claims 1-11, wherein the cathode comprises an electronically conducting metal electrocatalyst.

13. Apparatus, preferably for performing the method according to any one of claims 1-12, comprising:
- an absorber unit, and
- an electrochemical cell connected to the absorber unit, where the electrochemical cell is operative to reduce carbon dioxide from the capture solvent,
wherein the absolute pressure within the absorber unit, and electrochemical cell is 1 bar or more and 200 bar or less, and preferably 20 bar or more and 138 bar or less, and
wherein the electrochemical cell comprises at least two compartments separated by a semi-permeable separator.

14. Apparatus according to claim 13, further comprising a stripper unit and/or a separation unit connected to the electrochemical cell.

15. Apparatus according to claim 13 or 14, wherein said electrochemical cell comprises one or more electrodes that are heated.
